# EUROPEAN PATENT APPLICATION

(11) **EP 4 826 832 A1**
(43) Date of publication of application: **21.10.2026**
(21) Application number: 23961449.8
(22) Date of filing: 13.12.2023
(51) Int. Cl.: H01M 10/42

(54) **BATTERY PACK, INFORMATION PROCESSING METHOD, AND PROGRAM**

(71) Applicant: Japan Tobacco Inc., Tokyo 105-6927 (JP)
(72) Inventor: YAMADA, Manabu, Tokyo 130-8603 (JP); SENJU, Masatoshi, Tokyo 130-8603 (JP); SERITA, Kazutoshi, Tokyo 130-8603 (JP); KAWASAKI, Reijiro, Tokyo 130-8603 (JP)
(74) Representative: Hoffmann Eitle
(86) International application number: PCT/JP2023/044693
(87) International publication number: WO 2025/126383

(57) **Abstract**

[Problem] To provide a mechanism capable of appropriately performing information collection utilizing the replacement of a battery pack.

[Solution] A battery pack detachably connected to an inhalation device having a heating unit that heats an aerosol source to generate an aerosol, the battery pack comprising: a rechargeable battery; a memory unit that stores information; a communication terminal that transmits and receives information between the battery pack and a device to which the battery pack is connected; and a control unit that transmits information stored in the memory unit via the communication terminal and deletes information to be deleted in the information stored in the memory unit while leaving information not to be deleted when a predetermined condition relating to replacement of the battery pack is satisfied.

## Description

### TECHNICAL FIELD

The present disclosure relates to a battery pack, an information processing method, and a program.

### BACKGROUND ART

Inhalation devices that generate substances to be inhaled by a user are in widespread use. For example, an inhalation device employs an aerosol source for generating an aerosol, and a substrate including a flavor source or the like for imparting a flavor component to the generated aerosol, to generate an aerosol to which the flavor component has been imparted. The user can enjoy the flavor by inhaling the aerosol to which the flavor component has been imparted, generated by the inhalation device. The action by which the user inhales the aerosol will also be referred to below as "puffing" or a "puffing action". Examples of devices classified as inhalation devices that may be cited include those used in place of cigarettes, such as heated tobacco and electronic cigarettes, and also nebulizers, etc. used for medical purposes. It should be noted that heated tobacco is an inhalation device of the type which generates an aerosol by heating an aerosol source. An electronic cigarette is an inhalation device of the type which generates an aerosol by atomizing a liquid aerosol source.

Laws and regulations relating to the right to repair have been established in recent years. Laws and regulations relating to the right to repair refer to various laws and regulations which aim to provide an environment in which end users can use their industrial products for longer while repairing them, from the viewpoint of consumer protection and environmental protection. According to the right to repair, it is possible to repair a product that has been broken or damaged in use. As a result, consumers can postpone their replacement and save money. Furthermore, the generation of waste and the use of resources can be reduced, thus reducing the environmental impact. The right to repair is thus an important aspect in promoting a circular economy because it benefits both consumers and the environment.

PTL 1 indicated below discloses an inhalation device with a replaceable battery pack, as technology relating to the right to repair.

### CITATION LIST

### PATENT LITERATURE

PTL 1: WO 2014/163664 A1

### SUMMARY OF INVENTION

### PROBLEM TO BE SOLVED BY THE INVENTION

The technology disclosed in PTL 1 has only recently been developed, and there is still room for improvement in various aspects.

Therefore, the present disclosure was devised in view of the above problems, and an object of the present disclosure is to provide a mechanism capable of appropriately performing information collection utilizing the replacement of a battery pack.

### SOLUTION TO PROBLEM

In order to solve the problem above, one aspect of the present disclosure provides a battery pack detachably connected to an inhalation device having a heating unit that heats an aerosol source to generate an aerosol, the battery pack comprising: a rechargeable battery; a memory unit that stores information; a communication terminal that transmits and receives information between the battery pack and a device to which the battery pack is connected; and a control unit that transmits information stored in the memory unit via the communication terminal and deletes information to be deleted in the information stored in the memory unit while leaving information not to be deleted when a predetermined condition relating to replacement of the battery pack is satisfied.

The predetermined condition may include connection of the battery pack to a charging device that charges the battery.

The predetermined condition may include completion of transmission of the information to be deleted to the charging device.

The control unit may encrypt and retain the information to be deleted stored in the memory unit when transmission of the information to be deleted to the charging device fails.

The information to be deleted may include identification information of a user of the inhalation device.

The information to be deleted may include identification information of the inhalation device.

The information to be deleted may include location information of the inhalation device.

The information not to be deleted may include identification information of the battery pack.

The information not to be deleted may include discharge information at the time of heating indicating a discharge state of the battery when the heating unit implemented heating.

The discharge information at the time of heating may include at least one of a voltage drop value of the battery when the heating unit implemented heating, a decrease value of the charge capacity of the battery when the heating unit implemented heating, or the number of discharges implemented for heating by the heating unit.

The information not to be deleted may include information indicating the state of health (SOH) of the battery.

The information not to be deleted may include information indicating a place of replacement of the battery pack.

The control unit may convert the information to be deleted and retain the converted information in the memory unit when the predetermined condition relating to replacement of the battery pack is satisfied.

Furthermore, in order to solve the problem above, another aspect of the present disclosure provides an information processing method implemented by a processor controlling a battery pack detachably connected to an inhalation device having a heating unit that heats an aerosol source to generate an aerosol, the battery pack comprising: a rechargeable battery; a memory unit that stores information; and a communication terminal that transmits and receives information between the battery pack and a device to which the battery pack is connected, wherein the information processing method comprises: transmitting information stored in the memory unit via the communication terminal; and deleting information to be deleted in the information stored in the memory unit while leaving information not to be deleted when a predetermined condition relating to replacement of the battery pack is satisfied.

Furthermore, in order to solve the problem above, another aspect of the present disclosure provides a program executed by a computer controlling a battery pack detachably connected to an inhalation device having a heating unit that heats an aerosol source to generate an aerosol, the battery pack comprising: a rechargeable battery; a memory unit that stores information; and a communication terminal that transmits and receives information between the battery pack and a device to which the battery pack is connected, wherein the program causes the computer to function as a control unit that transmits information stored in the memory unit via the communication terminal and deletes information to be deleted in the information stored in the memory unit while leaving information not to be deleted when a predetermined condition relating to replacement of the battery pack is satisfied.

### ADVANTAGEOUS EFFECTS OF INVENTION

As described above, according to the present disclosure, a mechanism capable of appropriately performing information collection utilizing the replacement of a battery pack is provided.

### BRIEF DESCRIPTION OF DRAWINGS

[Fig. 1] is a diagram to illustrate the outline of the system according to the embodiment.
[Fig. 2] is a schematic diagram schematically showing a first configuration example of an inhalation device according to the embodiment.
[Fig. 3] is a schematic diagram schematically showing a second configuration example of an inhalation device according to this embodiment.
[Fig. 4] is a block diagram showing a configuration example of a battery pack according to the embodiment.
[Fig. 5] is a flowchart showing an example of a processing flow implemented by the battery pack according to the embodiment.

### EMBODIMENTS OF THE INVENTION

Preferred embodiments of the present disclosure will be described in detail below with reference to the appended drawings. It should be noted that components having substantially the same functional configuration will be assigned the same reference numbers in the description and drawings to avoid giving a duplicate description.

### <1. Outline>

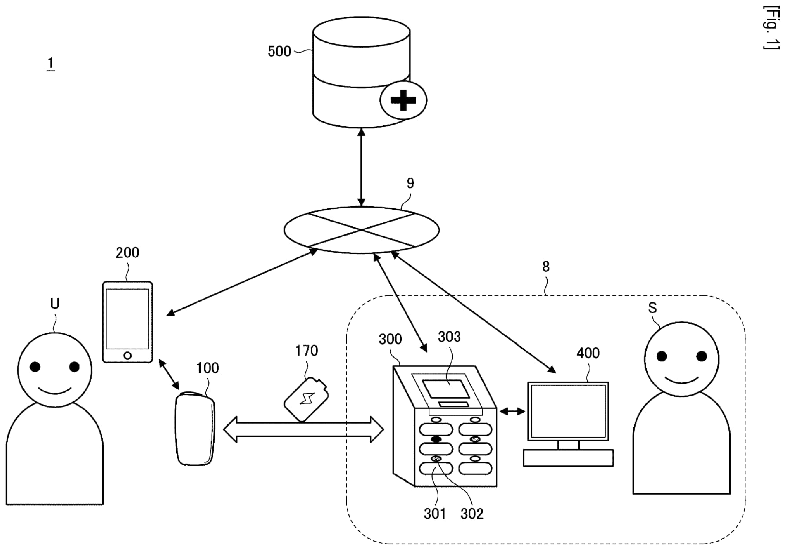

An outline of a system according to an embodiment of the present disclosure will be described first of all with reference to fig. 1.

Fig. 1 is a diagram to illustrate the outline of the system according to the embodiment. As shown in fig. 1, a system 1 according to this embodiment comprises: an inhalation device 100, a user terminal 200, a charging station 300, a sales outlet terminal 400, and a management server 500.

The inhalation device 100 and the user terminal 200 are carried and used by a user U. An inhalation device 100 and a user terminal 200 used by the same user U may be capable of communicating by using, for example, BLE (Bluetooth Low Energy (registered trademark)), or similar.

The inhalation device 100 is a device for generating an aerosol to be inhaled by the user U, using a substrate containing an aerosol source. The inhalation device 100 may be what is known as an electronic cigarette or a heated cigarette. The inhalation device 100 may have a battery pack 170 detachably fitted (i.e., connected) thereto. The inhalation device 100 then operates with power from the battery pack 170 fitted thereto. A structure with the battery pack 170 removed from the inhalation device 100 may be referred to below as a "main body", or may also be referred to simply as the "inhalation device 100".

The battery pack 170 includes at least a secondary battery which can be charged and discharged. The battery pack 170 may include a storage medium and a communication terminal. Information may then be read from and written to the storage medium via the communication terminal by means of the inhalation device 100 or the charging station 300 to which the battery pack 170 is connected.

The user terminal 200 is an example of a terminal device used by the user U. The user terminal 200 may be a smartphone or tablet terminal, or similar. The user terminal 200 functions as an interface between the user U and the system 1. For example, the user terminal 200 inputs/outputs various types of information for replacement of the battery pack 170. Furthermore, the user terminal 200 may control operation of the inhalation device 100 by way of communication with the inhalation device 100.

The charging station 300 and the sales outlet terminal 400 are placed in a sales outlet 8 such as a convenience store, and are used by staff S working at the sales outlet 8. A charging station 300 and a sales outlet terminal 400 placed in the same sales outlet 8 may be capable of communicating by using, for example, a LAN (Local Area Network), or similar. The sales outlet 8 sells substrate packs containing one or more substrates used by the inhalation device 100. The sales outlet 8 may sell multiple types of substrate packs containing different types of substrates or different numbers of substrates.

The charging station 300 is an example of a charging device that charges the battery pack 170. The charging station 300 may have the battery pack 170 detachably connected thereto. The charging station 300 then charges the connected battery pack 170. To be more specific, the charging station 300 comprises an accommodating case 301 for accommodating the battery pack 170. The charging station 300 then charges the battery pack 170 accommodated in the accommodating case 301. Furthermore, the charging station 300 has LEDs (light emitting diodes) 302 that emit light in a color corresponding to the charging status of the battery packs 170 and a touch panel 303 for inputting and outputting various types of information.

The user U can replace the battery pack 170 fitted to the inhalation device 100 at the sales outlet 8. "Replacement" as referred to here means return of a spent battery pack 170 and provision of a battery pack 170 charged by the charging station 300.

For example, the user U returns the spent battery pack 170 after removing it from the inhalation device 100. The staff S connects the battery pack 170 returned by the user to the charging station 300 to start charging, and also removes a charged battery pack 170 from the charging station 300 for provision to the user U. The user U receives the battery pack 170 provided by the staff S and fits this battery pack 170 to the inhalation device 100. A battery pack 170 replacement service such as this enables the user U to replace a spent battery pack 170 with a fully charged battery pack 170 at any time "on the go", without the need to charge at home.

The service provided by the charging station 300 is not limited to replacement of battery packs 170. That is to say, the charging station 300 may accept only return of battery packs 170 or may only provide battery packs 170. For example, the user U may rent a spare battery pack 170, separately from the battery pack 170 they are carrying, or may return a rented spare battery pack 170.

Battery packs 170 are thus replaceably provided to each of a plurality of inhalation devices 100, via the charging station 300. The user U may, of course, also charge the battery pack 170 at home, etc.

The sales outlet terminal 400 is an example of a terminal device used by the staff S. The sales outlet terminal 400 may be a cash register terminal compliant with a POS (Point of Sale) system, for example. The sales outlet terminal 400 functions as an interface between the staff S and the system 1. For example, the sales outlet terminal 400 input/outputs various types of information for replacement of the battery pack 170. Furthermore, the sales outlet terminal 400 is also used to settle payments for replacement of battery packs 170.

The management server 500 is an example of a control device for controlling overall operation within the system 1. The management server 500 communicates via a network 9 with each of the user terminal 200, the charging station 300, and the sales outlet terminal 400, and controls operations thereof.

As an example, the management server 500 collects and analyzes various types of information relating to replacement of battery packs 170, and, based on analysis results, updates heating profiles and notifies the user U of the timing for replacing the battery pack 170. As another example, the management server 500 controls displays on the user terminal 200, charging station 300, and sales outlet terminal 400. As another example, the management server 500 performs processing for determining the status of the battery packs 170, recovering (i.e. removing) any that are degraded or faulty, and repairing and redistributing any that can be repaired.

### <2. Configuration example>

### <2.1. Configuration example of inhalation device 100>

The inhalation device 100 is a device for generating a substance to be inhaled by a user. Hereinafter, the substance generated by the inhalation device 100 will be described as being an aerosol. Alternatively, the substance generated by the inhalation device 100 may be a gas.

### (1) First configuration example

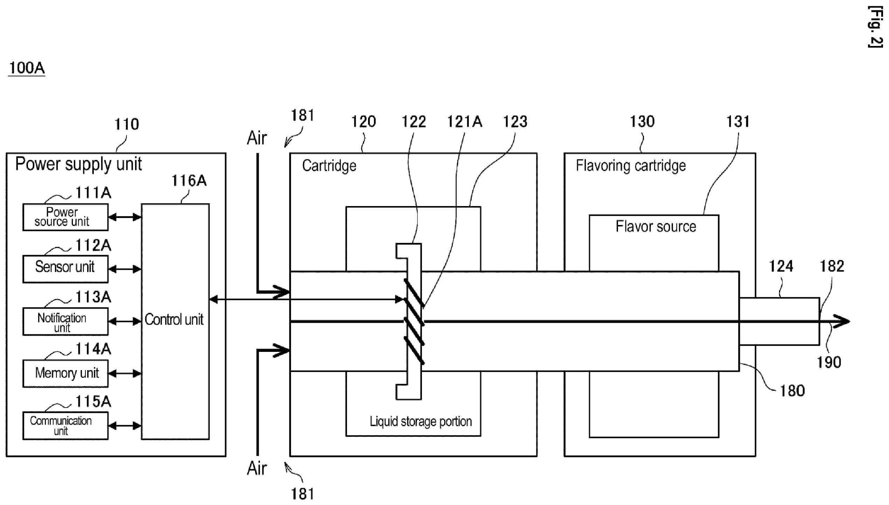

Fig. 2 is a schematic diagram schematically showing a first configuration example of the inhalation device 100 according to this embodiment. As shown in fig. 2, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. The power source unit 111A may be configured, for example, by a rechargeable battery such as a lithium ion secondary battery.

The sensor unit 112A acquires various types of information relating to the inhalation device 100A. As an example, the sensor unit 112A is configured by a pressure sensor such as a condenser microphone, a flow rate sensor or a temperature sensor, etc., and acquires values associated with inhalation by a user. As another example, the sensor unit 112A is configured by an input device, such as a button or switch, for accepting input of information from the user.

The notification unit 113A notifies the user of information. The notification unit 113A is, for example, configured by a light-emitting device that emits light, a display device that displays images, a sound output device that outputs sound, or a vibration device that vibrates, etc.

The memory unit 114A stores various types of information for operation of the inhalation device 100A. The memory unit 114A is configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs. The control unit 116A is realized by a CPU (central processing unit) or an electronic circuit such as a microprocessor, for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. In the example shown in fig. 2, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A. By way of example, electricity may be supplied when the sensor unit 112A detects that the user has started inhaling and/or that predetermined information has been input. The supply of electricity may then be stopped when the sensor unit 112A detects that the user has finished inhaling and/or that predetermined information has been input.

The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Partway along the air flow path 180, the liquid guiding portion 122 is disposed on the upstream side (the side closer to the air inflow hole 181), and the flavor source 131 is disposed on the downstream side (the side closer to the air outflow hole 182). Air flowing in through the air inflow hole 181 as the user inhales is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### (2) Second configuration example

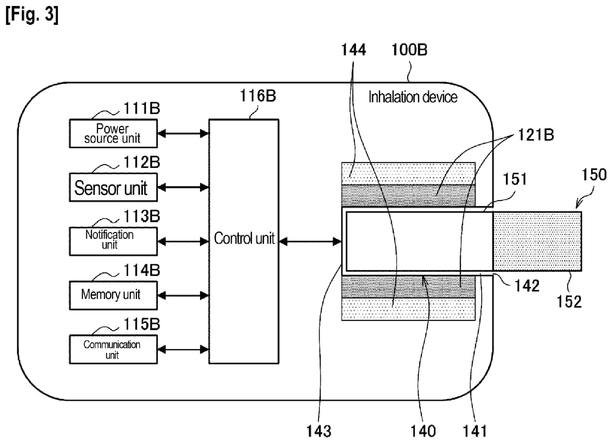

Fig. 3 is a schematic diagram schematically showing a second configuration example of the inhalation device 100 according to this embodiment. As shown in fig. 3, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A of the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100B, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated on the drawings, and reaches the inside of the user's mouth together with the aerosol generated from the substrate portion 151.

In the example shown in fig. 3, the heating unit 121B has a film-like form and is arranged so as to cover the outer circumference of the accommodating portion 140. Then, when the heating unit 121B generates heat, the substrate portion 151 of the stick-type substrate 150 is heated from the outer periphery, generating the aerosol.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

### (3) Supplementary information

In the following description, where there is no particular need to distinguish between the inhalation device 100A and the inhalation device 100B described above, the letter at the end of the reference sign will be omitted and these inhalation devices will be referred to in a general manner as the "inhalation device 100"and described without distinction. Similarly, where there is no particular need to distinguish between components common to the inhalation device 100A and the inhalation device 100B, the letter at the end of the reference sign will be omitted, and those components will be described without distinction.

The inhalation device 100 is an example of an aerosol-generating system which generates an aerosol to be inhaled by a user by using a substrate containing either one of an aerosol source and a flavor source. The flavor source is a component for imparting a flavor component to the aerosol. In the first configuration example, the cartridge 120 and the flavoring cartridge 130 constitute an example of a substrate used in the aerosol-generating system. In the second configuration example, the stick-type substrate 150 is an example of a substrate used in the aerosol-generating system. In terms of the second configuration example, the combination of the inhalation device 100 and the stick-type substrate 150 may also be seen as an aerosol-generating system.

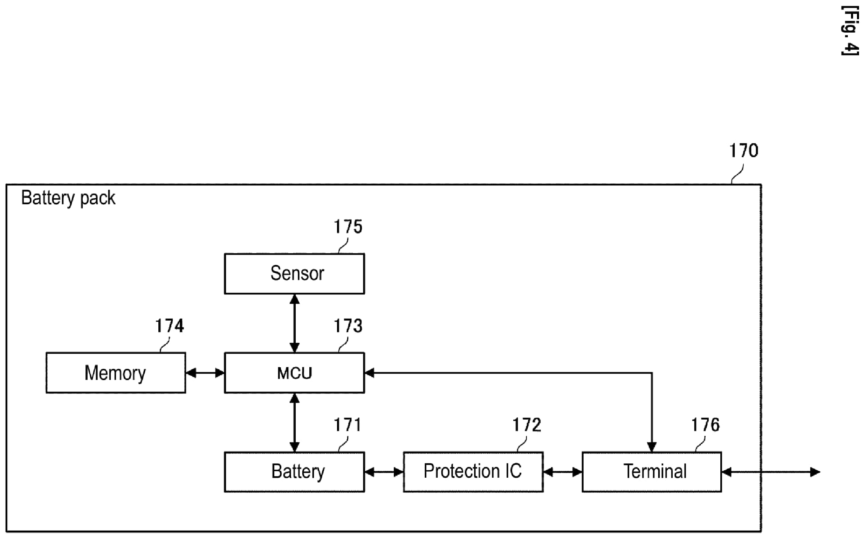

The battery pack 170 shown in fig. 1 includes at least the power source unit 111 shown in fig. 2 or fig. 3. A configuration example of the battery pack 170 will be described next with reference to fig. 4.

Fig. 4 is a block diagram showing a configuration example of the battery pack 170 according to this embodiment. As shown in fig. 4, the battery pack 170 comprises: a battery 171, a protection IC (Integration Circuit) 172, an MCU (Micro Controller Unit) 173, a memory 174, a sensor 175, and a terminal 176.

The battery 171 is a secondary battery which can be charged and discharged. The battery 171 corresponds to the power source unit 111 shown in fig. 2 or fig. 3. The battery 171 supplies power to an external device (e.g., the main body of the inhalation device 100) via the protection IC 172 and the terminal 176. Furthermore, the battery 171 is charged by means of power supplied from an external device (e.g., the charging station 300) via the protection IC 172 and the terminal 176.

The protection IC 172 is a protection circuit for stopping charging in the event of overcharging and stopping discharging in the event of over-discharge.

The MCU 173 is an example of a control unit for controlling operation of the battery pack 170. The battery pack 170 implements various types of processing on the basis of control performed by the MCU 173. Examples of the processing controlled by means of the MCU 173 include storage and reading of information by the memory 174, detection of information by the sensor 175, sending/receiving of power via the terminal 176, and sending/receiving of information via the terminal 176. Other processing implemented by the battery pack 170, such as processing based on input of information to each component and information output from each component, are also controlled by means of the MCU 173.

Note that the battery pack 170 may execute various processes based on control by the control unit 116 of the inhalation device 100. Storage and reading of information by the memory 174, detection of information by the sensor 175, sending/receiving of power via the terminal 176, and sending/receiving of information via the terminal 176 may be controlled by the control unit 116 of the inhalation device 100. Other processing implemented by the battery pack 170, such as processing based on input of information to each component and information output from each component, may also be controlled by the control unit 116 of the inhalation device 100. Since the control unit 116 of the inhalation device 100 implements various types of processing of the battery pack 170, it is unnecessary to provide an MCU 137 in the battery pack, and the system configuration in the battery pack can be simplified. Further, this can reduce the price of the battery pack itself.

Control of storage and reading of information by the memory 174 may be implemented by an external device. For example, when the battery pack 170 is connected to the charging station 300, the charging station 300 may control storage and reading of information by the memory 174. Note that control of storage and reading of information by the memory 174 may be implemented by another external device (not depicted) other than the charging station 300. As a result of the external device controlling storage and reading of information by the memory 174, it becomes unnecessary to provide an MCU 137 in the battery pack, and the system configuration in the battery pack can be simplified. Further, this can reduce the price of the battery pack itself.

The memory 174 is an example of memory unit for storing information. The memory 174 is configured by a non-volatile storage medium such as a flash memory, for example.

The sensor 175 is an example of a detector for detecting various types of information relating to the battery pack 170. For example, the sensor 175 detects the temperature of the battery 171, and detects voltage values and current values during charging and discharging of the battery 171.

The terminal 176 functions as a power terminal for sending/receiving power and an information terminal for sending/receiving information to/from the device to which the battery pack 170 is connected. The terminal 176 may be a USB (Universal Serial Bus) connector, for example.

It should be noted that fig. 4 illustrates an example in which the protection IC 172 is included in the battery pack 170, but the protection IC 172 may equally be included in the device to which the battery pack 170 is connected (e.g., the main body of the inhalation device 100 or the charging station 300).

### (4) Heating profile

The control unit 116 controls the operation of the heating unit 121 based on the heating profile. The heating profile is control information for controlling the temperature at which the aerosol source is heated. The heating profile defines a target value of a parameter corresponding to a temperature at which the aerosol source is heated. The temperature of the heating unit 121 is an example of the temperature at which the aerosol source is heated. The resistance of the heating unit 121 is an example of a parameter corresponding to the temperature at which the aerosol source is heated. That is to say, the heating profile may also define a target value of the resistance of the heating unit 121 (which is also referred to below as the "target resistance"). The resistance of the heating unit 121 varies according to the temperature of the heating unit 121 (a heating resistor constituting the heating unit 121, to be more precise). By way of example, it is assumed hereinafter that the resistance of the heating unit 121 rises as the temperature of the heating unit 121 rises.

The temperature control of the heating unit 121 can be realized by known feedback control, for example. The feedback control may be, for example, PID control (Proportional-Integral-Differential Controller). The control unit 116 may cause power from the power source unit 111 to be supplied to the heating unit 121 in the form of pulses by pulse width modulation (PWM) or pulse frequency modulation (PFM). In that case, the control unit 116 can control the temperature of the heating unit 121 by adjusting the duty ratio of the power pulses in the feedback control.

A period during which electrical supply to the heating unit 121 is controlled on the basis of the heating profile, in other words a period during which heating by means of the heating unit 121 is implemented on the basis of the heating profile, will also be referred to below as a "heating session". Furthermore, heating based on the heating profile may also be referred to below simply as "heating".

### <3. Collection of information via battery pack 170>

An external device such as the main body of the inhalation device 100 or the charging station 300 may write various types of information to the memory 174 while connected to the battery pack 170. More specifically, the MCU 173 writes information received from the external device into the memory 174 via the terminal 176 while connected to the external device. As an example, the MCU 173 may receive information relating to electrical supply to the main body of the inhalation device 100 from the battery 171 while the battery pack 170 is connected to the main body of the inhalation device 100, and may write this information into the memory 174. As another example, the MCU 173 may receive information relating to charging of the battery 171 by the charging station 300 while the battery pack 170 is connected to the charging station 300, and may write this information into the memory 174.

Of course, the battery pack 170 may write information acquired by the battery pack 170 itself into the memory 174. As an example, the MCU 173 may write, into the memory 174, information detected by means of the sensor 175 while the battery pack 170 is connected to the main body of the inhalation device 100. As another example, the MCU 173 may write, into the memory 174, information detected by means of the sensor 175 while the battery pack 170 is connected to the charging station 300.

While the battery pack 170 is connected to an external device such as the main body of the inhalation device 100 or the charging station 300, the MCU 173 sends information stored in the memory 174 to the external device via the terminal 176. As a result, the external device can perform various types of processing using the information received from the battery pack 170. For example, the charging station 300 sends the information received by the battery pack 170 to the management server 500.

Preferably, the management server 500 periodically collects and analyzes information relating to the inhalation device 100, and implements measures using the analysis results in order to improve the quality of experience for the user who is using the inhalation device 100. The information relating to the inhalation device 100 is typically collected by the management server 500 via the user terminal 200, which is capable of communicating with both the inhalation device 100 and the management server 500. However, it is difficult for information to be collected periodically via the user terminal 200 if the inhalation device 100 does not communicate with the user terminal 200, or if the user terminal 200 does not communicate with the management server 500.

In this regard, the configuration above enables the management server 500 to periodically collect information relating to the inhalation device 100 via the charging station 300 to which the battery pack 170 is connected when the battery pack 170 is replaced. As a result, various measures can be implemented to improve the quality of experience for the user who is using the inhalation device 100, thereby enabling a better quality of user experience.

Furthermore, the configuration above enables exchange of information among external devices via the battery pack 170. The creation of various services is expected as a result.

Examples of the information which can be stored in the battery pack 170 and collected by utilizing replacement of the battery pack 170 will be described below.

### (1) Battery pack ID

The memory 174 of the battery pack 170 stores a battery pack ID, which is identification information of the battery pack 170. The battery pack ID may be written in when the battery pack 170 is manufactured.

### (2) Replacement log

The memory 174 of the battery pack 170 stores a replacement log, which is a log relating to replacement of the battery pack 170. The replacement log may include at least any one item of information from those illustrated below.

The replacement log may include a device ID, which is identification information of an inhalation device 100 to which the battery pack 170 provided from the charging station 300 was connected. Furthermore, the replacement log may include a user ID, which is identification information of the user U of the inhalation device 100 to which the battery pack 170 provided from the charging station 300 is connected.

The replacement log may include information indicating a time of replacement of the battery pack 170. More specifically, the replacement log may include information indicating the time at which the battery pack 170 was provided (e.g., the date and time at which the battery pack 170 was removed from the charging station 300, or the date and time at which the battery pack 170 was connected to the inhalation device 100). The replacement log may also include information indicating the time the battery pack 170 was returned (for example, the date and time at which the battery pack 170 was removed from the inhalation device 100, or the date and time at which the battery pack 170 was connected to the charging station 300).

The replacement log may include information indicating the place where the battery pack 170 was replaced. More specifically, the replacement log may include information indicating the place where the battery pack 170 was provided (e.g., location information or identification information of the sales outlet 8). The replacement log may furthermore include information indicating the place where the battery pack 170 was returned (e.g., location information or identification information of the sales outlet 8).

The replacement log may include information of a substrate pack purchased together with replacement of the battery pack 170. The substrate pack information includes the type of substrate and number of substrates contained in the substrate pack, for example.

The replacement log may include information indicating the number of times of replacement of the battery pack 170. The number of times of replacement of the battery pack 170 may be incremented each time the battery pack 170 is connected to a different inhalation device 100 from the previous time. Alternatively, the number of times of replacement of the battery pack 170 may be incremented each time the battery pack 170 is connected to the charging station 300.

An example of the replacement log was described above. The replacement log may be acquired by and written to the main body of the inhalation device 100, the charging station 300, or the battery pack 170 at the time of replacement of the battery pack 170, for example. Moreover, for the information of a substrate pack purchased together with replacement of the battery pack 170, the charging station 300 may acquire this information from the sales outlet terminal 400 and write the information into the memory 174 of the battery pack 170.

### (3) Heating-related discharge information

The memory 174 of the battery pack 170 stores heating-related discharge information, which is information indicating the discharge situation of the battery 171 when the heating unit 121 implemented heating based on the heating profile. The heating-related discharge information may include at least any one item of information from those illustrated below.

The heating-related discharge information may include the value of a drop in voltage of the battery 171 when the heating unit 121 implemented heating. The value of the drop in voltage of the battery 171 may be the difference in voltage of the battery 171 before and after heating was implemented. This information makes it possible to judge the state of deterioration of the battery pack 170 (more specifically, the battery 171), or whether an error has occurred.

The heating-related discharge information may include the value of a reduction in charge capacity (units: mAh) of the battery 171 when the heating unit 121 implemented heating. The value of the reduction in charge capacity of the battery 171 may be the difference in charge capacity before and after heating was implemented, or the difference in charge capacity from the time of manufacture until the present time. This information makes it possible to judge the state of deterioration of the battery pack 170, or whether an error has occurred.

The heating-related discharge information may include the value of an increase in temperature of the battery 171 when the heating unit 121 implemented heating. The value of the increase in temperature of the battery 171 may be the difference between the minimum temperature and maximum temperature during a heating session. This information makes it possible to judge the state of deterioration of the battery pack 170, or whether an error has occurred.

The heating-related discharge information may include a time-series transition of the discharge amount during a heating session. The discharge amount temporarily increases immediately after a puff has been taken in order to restore the temperature of the heating unit 121, which decreases as a puff is taken, to its original value. This information makes it possible to determine the number of puffs taken during a heating session.

The heating-related discharge information may include the number of times discharging was performed for heating. This information makes it possible to determine the number of times heating was implemented.

The heating-related discharge information may include intervals between discharges performed for heating. This information makes it possible to determine intervals of heating implementation.

The heating-related discharge information may include at least either of the discharge amount and discharge time when heating was implemented. This information makes it possible to determine the heating profile used by the inhalation device 100.

The heating-related discharge information may include the number of times discharging was performed for an autorun function. The autorun function is a function in which the start of heating is triggered by a substrate being set in (e.g., inserted into or connected to) the inhalation device 100. This information makes it possible to determine the number of times the autorun function was implemented.

The heating-related discharge information may include the number of times abnormal discharge occurred and the discharge amount when the abnormal discharge occurred. This information makes it possible to record errors that have occurred in the battery pack 170.

Examples of heating-related discharge information were described above. The heating-related discharge information may be acquired by the battery pack 170 or the main body of the inhalation device 100, and may be written into the memory 174, for example.

### (4) Non-heating-related discharge information

The memory 174 of the battery pack 170 stores non-heating-related discharge information, which is information indicating the discharge situation of the battery 171 during periods in which heating based on the heating profile is not being implemented. The non-heating-related discharge information may include at least any one item of information from those illustrated below.

The non-heating-related discharge information may include the number of times discharging was performed for a transition from sleep mode to active mode. This information makes it possible to determine the number of transitions from sleep mode to active mode. It should be noted that sleep mode is an operating mode in which heating is prohibited. Sleep mode can be switched to active mode in response to a user action such as depressing a button, for example. Active mode is an operating mode in which heating is permitted. In active mode, heating is started in response to a user action such as depressing a button, for example.

The non-heating-related discharge information may include at least either of the discharge amount and discharge time during periods of continuous communication by the communication unit 115. This information makes it possible to determine a communication amount or a communication time of the inhalation device 100.

Examples of non-heating-related discharge information were described above. The non-heating-related discharge information may be acquired by the battery pack 170 or the main body of the inhalation device 100, and may be written into the memory 174, for example.

### (5) Device information

The memory 174 of the battery pack 170 stores device information, which is information indicating the mode of use of the inhalation device 100. The device information may include at least any one item of information from those illustrated below.

The device information may include information indicating a time of smoking. "Smoking" refers to the overall action of the user U inhaling the aerosol generated during heating based on the heating profile. Multiple puffs may be taken during one occasion of "smoking". The information indicating the time of smoking may be a date and time at which heating started, or may be a date and time of the puff initially detected during a heating session. This information makes it possible to determine smoking intervals (i.e., heating session intervals), the number of times of smoking per day (i.e., the number of heating sessions), and the total number of times of smoking.

The device information may include information indicating a smoking time. The information indicating the smoking time of the user U may be the length of a heating session, or may be the time from the puff initially detected until the puff detected last during a heating session. This information can be utilized to customize the heating profile to suit the user U.

The device information may include information indicating a total smoking time. The total smoking time is the cumulative total of smoking times since the inhalation device 100 was manufactured. This information can be utilized in order to recommend timings for maintenance of the inhalation device 100. Furthermore, this information makes it possible to determine the smoking time over the entire life-cycle of the inhalation device 100.

The device information may include information indicating a total number of times of smoking. The total number of times of smoking is the cumulative total of the number of times of smoking since the inhalation device 100 was manufactured. This information can be utilized in order to recommend timings for maintenance of the inhalation device 100. Furthermore, this information makes it possible to determine the number of times of smoking over the entire life-cycle of the inhalation device 100.

The device information may include information indicating a total usage time. The total usage time is the time elapsed from the time at which the inhalation device 100 was initially activated. This information can be utilized in order to recommend timings for maintenance of the inhalation device 100. Furthermore, this information makes it possible to determine the usage time of the inhalation device 100 over the entire life-cycle of the inhalation device 100.

The device information includes information indicating a security setting. The inhalation device 100 may be equipped with a security function enabling locking for child safety, etc. When the security function is enabled, the inhalation device 100 operates in a locked state with heating prohibited or operates in an unlocked state with heating permitted. Unlocking may be triggered in a number of ways, such as when a predetermined button is operated or when a communication connection with the user terminal 200 has been established. When the security function is disabled, heating is continuously permitted by the inhalation device 100. The information indicating the security setting may include a time at which the security function was enabled and a time at which the security function was disabled. The information indicating the security setting may further include, during a period in which the security function is enabled, a time of transition to the locked state and a time of transition to the unlocked state, and information indicating the unlock trigger. By referring to the information indicating the security setting together with the information indicating the time of smoking described above, it is possible to determine which unlock trigger was used to start smoking, or to determine that smoking was started while the security setting was disabled, etc.

The device information may include information indicating the number of puffs. The number of puffs is the number of times puffing was detected during a heating session. This information makes it possible to determine the number of puffs taken by the user U during one smoking session. This information can be utilized to customize the heating profile to suit the user U.

The device information may include information indicating times of puffing. The times of puffing are times at which puffing was detected during a heating session. This information makes it possible to determine when the user U took puffs during a heating session. This information can be utilized to customize the heating profile to suit the user U.

The device information may include information on the heating profile. The heating profile is control information for controlling the temperature at which the aerosol source is heated. Information on the heating profile may be used when the heating profile is customized to suit the user U.

The device information may include location information of the inhalation device 100. More specifically, the device information may include a time-series transition of location information of the inhalation device 100. Moreover, the location information of the user terminal 200 may also be used as location information of the inhalation device 100. This information makes it possible to determine behavior patterns of the user U. The behavior patterns of the user U can be utilized for the user terminal 200 to suggest smoking places or sales outlets 8 suited to the behavior patterns of the user U.

The device information may include information indicating an error that has occurred in the inhalation device 100. This information can be utilized in order to recommend timings for maintenance of the inhalation device 100.

Examples of device information were described above. The device information may be acquired by the battery pack 170 or the main body of the inhalation device 100, and may be written into the memory 174, for example.

### (6) Charging information

The memory 174 of the battery pack 170 stores charging information, which is information indicating the charging situation of the battery 171. The charging information may include at least any one item of information from those illustrated below.

The charging information may include information indicating the number of times of charging. The number of times of charging means the number of times that the battery pack 170 was connected to the charging station 300 or to a home charger, or similar. This information makes it possible to determine the state of deterioration of the battery pack 170.

The charging information may include information indicating charging intervals. A charging interval is the elapsed time from removal of the battery pack 170 from the charging station 300 or a home charger, etc., until connection thereto. This information makes it possible to determine the state of deterioration of the battery pack 170.

The charging information may include information indicating the time of charging and the amount of charging per charge. The time of charging means the date and time at which the battery pack 170 was connected to the charging station 300 or to a home charger, or similar. The amount of charging per charge means the value of voltage increase resulting from charging. This information makes it possible to determine the situation for each charge, and the state of deterioration of the battery pack 170.

The charging information may include information indicating a charging voltage or charging current. The charging voltage means the value of a voltage applied to the battery 171 during charging. The charging current means the value of a current flowing through the battery 171 during charging. This information makes it possible to determine the device which charged the battery pack 170 (charging station 300 or home charger).

The charging information may include information relating to location during charging. This information makes it possible to determine the place where the battery pack 170 was charged (e.g., at the sales outlet 8 or at home).

The charging information may include the number of times abnormal charging occurred and the amount of charging when the abnormal charging occurred. This information makes it possible to record errors that have occurred in the battery pack 170.

The charging information may include information indicating the SOH (States of Health) of the battery 171. This information makes it possible to determine the state of deterioration of the battery 171.

Examples of charging information were described above. The charging information may be acquired by the battery pack 170 or the charging station 300, and may be written into the memory 174, for example.

### (7) Supplementary information

Examples of the information which can be stored in the battery pack 170 and collected by utilizing replacement of the battery pack 170 were described above.

The battery pack 170 can store, in association with each other, at least two or more of the battery pack ID, replacement log, heating-related discharge information, non-heating-related discharge information, device information, and charging information, and can also send this information. This configuration enables more precise analysis of the information collected. For example, by associating the replacement log with the heating-related discharge information, it is possible to analyze the heating-related discharge situation of the inhalation device 100 identified by the device ID included in the replacement log.

### <4. Deletion of data in memory 174>

As described above, various information is stored in the memory 174. Considering that the battery pack 170 is provided so as to be replaceable in multiple inhalation devices 100, the information stored in the memory 174 may be read by an unspecified number of third parties. Leakage of information that should be kept confidential, such as personal information of the user U, is a problem that must be strictly avoided.

Therefore, the MCU 173 deletes information to be deleted in the information stored in the memory 174 when a predetermined condition relating to replacement of the battery pack 170 is satisfied. According to such a configuration, information leakage via the battery pack 170 can be prevented. On the other hand, the MCU 173 leaves information not to be deleted in the information stored in the memory 174 in the memory 174. According to such a configuration, information not to be deleted is semi-permanently stored in the memory 174 even after replacement of the battery pack 170. As a result, the inhalation device 100 can improve the quality of the user experience by referring to the information remaining in the memory 174 of the connected battery pack 170 and changing the heating profile. Further, the management server 500 can improve the quality of the user experience by using the information remaining in the memory 174 of the battery pack 170 for analysis throughout the lifetime of the battery pack 170. In this way, it becomes possible to appropriately perform information collection utilizing replacement of the battery pack 170.

Note that deletion of information to be deleted in the information stored in the memory 147 does not necessarily have to be performed by the MCU 173, and may be deleted by the inhalation device 100 or an external device. For example, the control unit 116 of the inhalation device 100 may delete information to be deleted in the information stored in the memory 174 when a predetermined condition relating to replacement of the battery pack 170 is satisfied. Also, for example, when a predetermined condition relating to replacement of the battery pack 170 is satisfied and the battery pack 170 is connected to the charging station 300, the charging station 300 may delete information to be deleted in the information stored in the memory 174. Note that deletion of information to be deleted in the information stored in the memory 147 may be implemented by another external device (not depicted) without being limited to these examples. By configuring the inhalation device 100 or an external device to delete information stored in the memory 147, it becomes unnecessary for the MCU 137 in the battery pack to delete information in the memory 147. As a result, it becomes unnecessary to provide an MCU 137 in the battery pack, and the system configuration in the battery pack can be simplified. Further, this can reduce the price of the battery pack itself.

The predetermined condition relating to replacement of the battery pack 170 may include connection of the battery pack 170 to the charging station 300. According to such a configuration, the opportunity for data in the memory 174 to be deleted can be limited to after the battery pack 170 is returned and the user U is no longer in possession. Therefore, it becomes possible to prevent a situation in which information to be collected is mistakenly deleted due to erroneous operation by the user U.

The predetermined condition relating to replacement of the battery pack 170 may include completion of transmission of information to be deleted to the charging station 300. That is, the battery pack 170 may delete information to be deleted in the transmitted information after the battery pack 170 is connected to the charging station 300 and the information stored in the memory 174 is transmitted to the charging station 300. According to such a configuration, it becomes possible to prevent information leakage while enabling collection of information to be deleted by the management server 500.

The MCU 173 may encrypt and retain information to be deleted stored in the memory 174 when transmission of the information to be deleted to the charging station 300 fails. Transmission failure to the charging station 300 may occur, for example, due to connection failure by the terminal 176 or a mismatch in communication protocol between the battery pack 170 and the charging station 300. The encrypted information may be decrypted and retransmitted at the next opportunity when the battery pack 170 is connected to the charging station 300. According to such a configuration, it becomes possible to prevent information stored in the memory 174 from being read by a third party while enabling complete information collection by the management server 500.

An example of information to be deleted will be described below.

Information to be deleted may be information relating to the user U. According to such a configuration, leakage of personal information of the user U can be prevented.

As an example, information to be deleted preferably includes the user ID of the user U. According to such a configuration, it becomes possible to prevent the user U from being identified based on information remaining in the memory 174.

As another example, information to be deleted preferably includes identification information of the inhalation device 100. According to such a configuration, it becomes possible to prevent the inhalation device 100 of the user U from being identified based on information remaining in the memory 174.

As an example, information to be deleted preferably includes device information. According to such a configuration, it becomes possible to prevent the usage state of the inhalation device 100 by the user U from being identified based on information remaining in the memory 174. In particular, information to be deleted preferably includes location information of the inhalation device 100. According to such a configuration, it becomes possible to prevent the address of the user U from being identified based on information remaining in the memory 174.

An example of information to be deleted was given above. Information not given in the examples above may remain in the memory 174 as information not to be deleted even after replacement of the battery pack 170. An example of information that should particularly be not deleted will be described below.

Information not to be deleted preferably includes the battery pack ID. According to such a configuration, the inhalation device 100 can determine the type of the connected battery pack 170 and perform operation settings corresponding to the type of the battery pack 170.

Information not to be deleted preferably includes discharge information at the time of heating. In particular, information not to be deleted preferably includes at least one of a voltage drop value of the battery 171 when the heating unit 121 implemented heating, a decrease value of the charge capacity of the battery 171 when the heating unit 121 implemented heating, or a temperature rise value of the battery 171 when the heating unit 121 implemented heating. According to such a configuration, the inhalation device 100 can predict deterioration of the battery pack 170.

Information not to be deleted preferably includes information indicating the state of health (SOH) of the battery pack 170. According to such a configuration, the inhalation device 100 can always refer to the SOH of the connected battery pack 170.

Information not to be deleted preferably includes information indicating the place for replacement of the battery pack 170. According to such a configuration, the inhalation device 100 can grasp the movement range of the battery pack 170.

Information not to be deleted preferably includes information indicating the number of times the battery pack 170 has been replaced. According to such a configuration, the inhalation device 100 can predict deterioration of the terminal 176 of the battery pack 170.

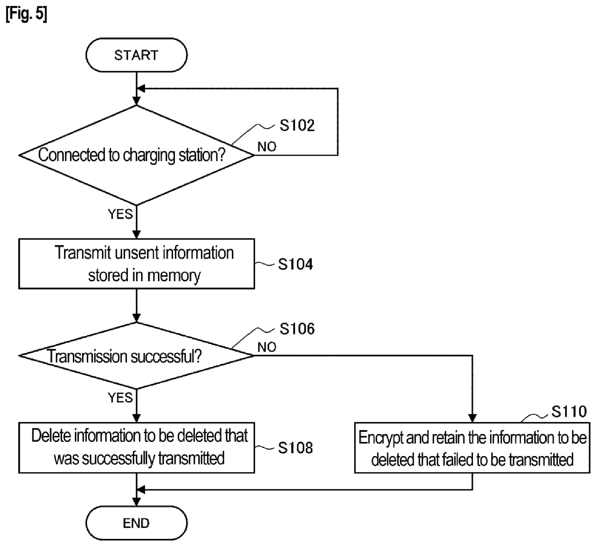

An example of a processing flow according to this embodiment will be described below with reference to fig. 5.

Fig. 5 is a flowchart showing an example of a processing flow implemented by the battery pack 170 according to this embodiment.

As shown in fig. 5, the battery pack 170 first of all determines whether it is connected to the charging station 300 (step S102).

When it is determined that the battery pack 170 is not connected to the charging station 300 (step S102: NO), the battery pack 170 stands by until it is connected to the charging station 300.

When it is determined that the battery pack 170 is connected to the charging station 300 (step S102: YES), the battery pack 170 transmits information not yet transmitted stored in the memory 174 to the charging station 300 (step S104).

Next, the battery pack 170 determines whether the transmission was successful (step S106).

When it is determined that the transmission was successful (step S106: YES), the battery pack 170 deletes information to be deleted in the successfully transmitted information from the memory 174 (step S108). Further, the battery pack 170 leaves information not to be deleted in the memory 174.

On the other hand, when it is determined that the transmission failed (step S106: NO), the battery pack 170 encrypts and leaves information to be deleted in the information for which transmission failed in the memory 174 (step S110). Further, the battery pack 170 leaves information not to be deleted in the memory 174.

The processing ends after this.

### <5. Supplementary information>

Preferred embodiments of the present disclosure were described in detail above with reference to the accompanying drawings, but the present disclosure is not limited to such examples. It is obvious that a person having ordinary knowledge in the technical field to which the present disclosure belongs will be able to conceive of a number of variant examples or modified examples within the scope of the technical concept disclosed in the claims, and any such variant examples or modified examples are naturally understood to fall within the technical scope of the present disclosure.

The embodiments above described an example in which information to be deleted is deleted when a predetermined condition relating to replacement of the battery pack 170 is satisfied, but the present disclosure is not limited to such an example. For example, the MCU 173 may convert information to be deleted when a predetermined condition relating to replacement of the battery pack 170 is satisfied and leave the converted information in the memory 174. The MCU 173 may then delete the actual information to be deleted from the memory 174. For example, the MCU 173 may leave a hash value obtained by hashing the user ID in the memory 174 and delete the user ID itself from the memory 174. According to such a configuration, information to be deleted can be processed and left so as not to identify the individual user U. As a result, it becomes possible to perform rough information analysis such as how many different users U have used the battery pack 170 based on the hash value of the user ID.

The above embodiments described an example in which the charging station 300 is operated by the staff S, but the present disclosure is not limited to such an example. The charging station 300 may equally be operated by self-service by the user U.

The above embodiments described an example in which the system 1 includes the sales outlet terminal 400. As an example, the functions of the sales outlet terminal 400 may be included in the user terminal 200. In that case, payments for replacement of a battery pack 170 may be settled by electronic payment using the user terminal 200. As another example, the functions of the sales outlet terminal 400 may be included in the charging station 300.

The embodiments above described a service for replacement of the battery pack 170 which functions as the power source unit 111 of the inhalation device 100, but the scope of the replacement service is not limited to such an example. The power source unit 111 of the inhalation device 100 may be charged by a portable charger with a built-in battery, which is configured to be detachable from the inhalation device 100. The replacement service may then be provided for the portable charger, and the technology relating to the present disclosure may be applied with the portable charger understood as the battery pack of the present disclosure.

The processing operations described in the above embodiments may be implemented with any device serving as the main agent. For example, in the above embodiment, the management server 500 is described as determining the state of the battery pack 170, but the processing to determine the state of the battery pack 170 may be implemented by the charging station 300.

It should be noted that the series of processes performed by each device described in the present description may be realized by using software, hardware, or any combination of software and hardware. Programs constituting the software are prestored on a recording medium (more specifically, a non-transitory computer-readable storage medium) provided internally or externally to each device, for example. Then, when the programs are executed, for example, by a computer for controlling each device described in the present description, the programs are read into a random access memory (RAM) and executed by means of a processing circuit such as a central processing unit (CPU). The recording medium is, for example, a magnetic disk, an optical disk, a magneto-optical disk, or a flash memory, etc. Furthermore, the computer programs may be distributed via a network, for example, without the use of a recording medium. Furthermore, the computer may be an application-specific integrated circuit (ASIC), a general-purpose processor which executes functions by reading software programs, or a computer on a server used for cloud computing, etc. Furthermore, the series of processes performed by each device described in the present description may be processed centrally by a single computer, or may be processed in a distributed manner by multiple computers. In addition, in the embodiments described above, two or more communication means present in a single device may be physically realized by a single medium.

Furthermore, the processing described using flowcharts or sequence diagrams in the present description need not necessarily be implemented in the order depicted. Some processing steps may be implemented in parallel. Furthermore, additional processing steps may be employed and some processing steps may be omitted.

The following configurations also fall within the technical scope of the present disclosure.
(1) A battery pack detachably connected to an inhalation device having a heating unit that heats an aerosol source to generate an aerosol, the battery pack comprising:
   a rechargeable battery;
   a memory unit that stores information;
   a communication terminal that transmits and receives information between the battery pack and the device to which the battery pack is connected; and
   a control unit that transmits information stored in the memory unit via the communication terminal and deletes information to be deleted in the information stored in the memory unit while leaving information not to be deleted when a predetermined condition relating to replacement of the battery pack is satisfied.
(2) The battery pack as disclosed in (1), wherein the predetermined condition includes connection of the battery pack to a charging device that charges the battery.
(3) The battery pack as disclosed in (2), wherein the predetermined condition includes completion of transmission of the information to be deleted to the charging device.
(4) The battery pack as disclosed in (3), wherein the control unit encrypts and retains the information to be deleted stored in the memory unit when transmission of the information to be deleted to the charging device fails.
(5) The battery pack as disclosed in any one of (1) to (4), wherein the information to be deleted includes identification information of a user of the inhalation device.
(6) The battery pack as disclosed in any one of (1) to (5), wherein the information to be deleted includes identification information of the inhalation device.
(7) The battery pack as disclosed in any one of (1) to (6), wherein the information to be deleted includes location information of the inhalation device.
(8) The battery pack as disclosed in any one of (1) to (7), wherein the information not to be deleted includes identification information of the battery pack.
(9) The battery pack as disclosed in any one of (1) to (8), wherein the information not to be deleted includes discharge information at the time of heating indicating the discharge state of the battery when the heating unit implemented heating.
(10) The battery pack as disclosed in (9), wherein the discharge information at the time of heating includes at least one of a voltage drop value of the battery when the heating unit implemented heating, a decrease value of the charge capacity of the battery when the heating unit implemented heating, or the number of discharges executed for heating by the heating unit.
(11) The battery pack as disclosed in any one of (1) to (10), wherein the information not to be deleted includes information indicating the state of health (SOH) of the battery.
(12) The battery pack as disclosed in any one of (1) to (11), wherein the information not to be deleted includes information indicating a place of replacement of the battery pack.
(13) The battery pack as disclosed in any one of (1) to (12), wherein the control unit converts the information to be deleted and retains the converted information in the memory unit when a predetermined condition relating to replacement of the battery pack is satisfied.
(14) An information processing method executed by a processor controlling a battery pack detachably connected to an inhalation device having a heating unit that heats an aerosol source to generate an aerosol,
   the battery pack comprising:
   a rechargeable battery;
   a memory unit that stores information; and
   a communication terminal that transmits and receives information between the battery pack and a device to which the battery pack is connected,
   wherein
   the information processing method comprises:
      transmitting information stored in the memory unit via the communication terminal; and
      deleting information to be deleted in the information stored in the memory unit while leaving information not to be deleted when a predetermined condition relating to replacement of the battery pack is satisfied.
(15) A program executed by a computer controlling a battery pack detachably connected to an inhalation device having a heating unit that heats an aerosol source to generate an aerosol,
   the battery pack comprising:
   a rechargeable battery;
   a memory unit that stores information; and
   a communication terminal that transmits and receives information between the battery pack and a device to which the battery pack is connected,
   wherein
   the program causes the computer to function as
   a control unit that transmits information stored in the memory unit via the communication terminal and deletes information to be deleted in the information stored in the memory unit while leaving information not to be deleted when a predetermined condition relating to replacement of the battery pack is satisfied.

### REFERENCE SIGNS LIST

1 System
100 Inhalation device
110 Power supply unit
111 Power source unit
112 Sensor unit
113 Notification unit
114 Memory unit
115 Communication unit
116 Control unit
120 Cartridge
121 Heating unit
122 Liquid guiding portion
123 Liquid storage portion
124 Mouthpiece
130 Flavoring cartridge
131 Flavor source
140 Accommodating portion
141 Internal space
142 Opening
143 Bottom portion
144 Heat insulating portion
150 Stick-type substrate
151 Substrate portion
152 Mouthpiece portion
170 Battery pack
171 Battery
172 Protection IC
173 MCU
174 Memory
175 Sensor
176 Terminal
180 Air flow path
181 Air inflow hole
182 Air outflow hole
200 User terminal
300 Charging station
301 Housing case
302 LED
400 Sales outlet terminal
500 Management server
8 Sales outlet
9 Network

## Claims

1. A battery pack detachably connected to an inhalation device having a heating unit that heats an aerosol source to generate an aerosol, the battery pack comprising:
a rechargeable battery;
a memory unit that stores information;
a communication terminal that transmits and receives information between the battery pack and a device to which the battery pack is connected; and
a control unit that transmits information stored in the memory unit via the communication terminal and deletes information to be deleted in the information stored in the memory unit while leaving information not to be deleted when a predetermined condition relating to replacement of the battery pack is satisfied.

2. The battery pack as claimed in claim 1, wherein the predetermined condition includes connection of the battery pack to a charging device that charges the battery.

3. The battery pack as claimed in claim 2, wherein the predetermined condition includes completion of transmission of the information to be deleted to the charging device.

4. The battery pack as claimed in claim 3, wherein the control unit encrypts and retains the information to be deleted stored in the memory unit when transmission of the information to be deleted to the charging device fails.

5. The battery pack as claimed in any one of claims 1 to 4, wherein the information to be deleted includes identification information of a user of the inhalation device.

6. The battery pack as claimed in any one of claims 1 to 5, wherein the information to be deleted includes identification information of the inhalation device.

7. The battery pack as claimed in any one of claims 1 to 6, wherein the information to be deleted includes location information of the inhalation device.

8. The battery pack as claimed in any one of claims 1 to 7, wherein the information not to be deleted includes identification information of the battery pack.

9. The battery pack as claimed in any one of claims 1 to 8, wherein the information not to be deleted includes discharge information at the time of heating indicating a discharge state of the battery when the heating unit implemented heating.

10. The battery pack as claimed in claim 9, wherein the discharge information at the time of heating includes at least one of a voltage drop value of the battery when the heating unit implemented heating, a decrease value of the charge capacity of the battery when the heating unit implemented heating, or the number of discharges implemented for heating by the heating unit.

11. The battery pack as claimed in any one of claims 1 to 10, wherein the information not to be deleted includes information indicating the state of health (SOH) of the battery.

12. The battery pack as claimed in any one of claims 1 to 11, wherein the information not to be deleted includes information indicating a place of replacement of the battery pack.

13. The battery pack as claimed in any one of claims 1 to 12, wherein the control unit converts the information to be deleted and retains the converted information in the memory unit when a predetermined condition relating to replacement of the battery pack is satisfied.

14. An information processing method implemented by a processor controlling a battery pack detachably connected to an inhalation device having a heating unit that heats an aerosol source to generate an aerosol,
the battery pack comprising:
a rechargeable battery;
a memory unit that stores information; and
a communication terminal that transmits and receives information between the battery pack and a device to which the battery pack is connected,
wherein
the information processing method comprises:
transmitting information stored in the memory unit via the communication terminal; and
deleting information to be deleted in the information stored in the memory unit while leaving information not to be deleted when a predetermined condition relating to replacement of the battery pack is satisfied.

15. A program executed by a computer controlling a battery pack detachably connected to an inhalation device having a heating unit that heats an aerosol source to generate an aerosol,
the battery pack comprising:
a rechargeable battery;
a memory unit that stores information; and
a communication terminal that transmits and receives information between the battery pack and a device to which the battery pack is connected,
wherein
the program causes the computer to function as
a control unit that transmits information stored in the memory unit via the communication terminal and deletes information to be deleted in the information stored in the memory unit while leaving information not to be deleted when a predetermined condition relating to replacement of the battery pack is satisfied.
